# EUROPÄISCHE PATENTSCHRIFT

(11) **EP 1 731 888 B1**
(45) Veröffentlichungstag und Bekanntmachung des Hinweises auf die Patenterteilung: **05.11.2008**
(21) Anmeldenummer: 06011431.1
(22) Anmeldetag: 01.06.2006
(51) Int. Cl.: G01K 1/14

(54) **Sensoreinheit, insbesondere für einen Verdampfer eines Kraftfahrzeugs**
Sensor unit, in particular for a carburettor of a motor vehicle
Unité de détection, en particulier pour un évaporateur dans un poids lourd

(30) Priorität: 06.06.2005 DE 10526189
(43) Veröffentlichungstag der Anmeldung: 13.12.2006
(73) Patentinhaber: Behr GmbH & Co. KG, 70469 Stuttgart (DE)
(72) Erfinder: Engelhardt, Uwe, 71554 Weissach in Tal (DE)

(56) Entgegenhaltungen:
- EP-A- 1 037 028
- JP-A- 8 261 845
- US-A- 5 560 392
- US-A1- 2002 122 459

## Beschreibung

Die Erfindung betrifft eine Sensoreinheit, insbesondere für einen Verdampfer eines Kraftfahrzeugs, gemäß dem Oberbegriff des Anspruchs 1.

Aus der DE 199 45 282 C2 ist ein Messrohr für Wärmetauscher, die von einem Strömungsmedium durchströmte und von Reinigungskörpern durchlaufene Rohre umfassen, mit mindestens einem Thermoelement bekannt. Das Messrohr weist ein Thermoelement auf, dessen Sensor zur Messung der Temperatur des durch das Messrohr strömenden Strömungsmediums im Bereich der Innenfläche des Messrohres angeordnet ist, wobei der Sensor im Bereich der Innenfläche des Messrohres fixiert ist. Der andere Teil des Sensors und die isolierten Leitungen desselben sind in einer Einbettung fixiert. Der Sensor kann ferner mit Hilfe einer Halterung, die der Form des Sensors angepasst ist, und in Kontakt mit dem Strömungsmedium steht, fixiert sein. Die äußere Form der Halterung entspricht hierbei der Form einer Mulde, die in der Innenfläche des Messrohres ausgebildet ist. Die Leitungen des Sensors sind durch zwei getrennte Bohrungen durch die Rohrwand des Messrohres nach außen geführt.

Die US-Patentschrift 4, 348, 870 zeigt eine Temperaturmessanordnung für eine Klimaanlage, die ein im Wesentlichen steifes Trägerelement mit einem langgestreckten Teil ist, an dem ein Temperatursensor angebracht ist. Das steife Trägerelement weist einen beschränkenden Bereich auf, der sich quer zu dem langgestreckten Teil erstreckt, um dadurch das Einführen in den Rohrbereich, insbesondere zwischen Wellrippen, der Klimaanlage zu begrenzen und dadurch den Sensor zu positionieren. Eine Schutzabdeckung kann den Sensor und die elektrischen Leitungen vor mechanischer Beschädigung und/oder elektrischem Kontakt mit den Wellrippen schützen.

Aus der US 2002/0122459 A1 ist eine Vorrichtung zur Messung von Daten eines heißen Gasstroms in einer Gasturbine bekannt. Hierzu sind eine Vielzahl von Temperatursensoren, welche in entsprechende Aufnahmeöffnungen eingesetzt sind vorgesehen.

Des weiteren ist aus dem US-Patent 5,560,392 ein Ventil bekannt, bei welchem mindestens zwei physikalische Eigenschaften simultan gemessen werden können. Zur Aufnahme mehrerer Sensoren sind hierfür entsprechende Bohrungen vorgesehen.

Derartige Temperaturmessanordnungen lassen noch Wünsche offen.

Es ist Aufgabe der Erfindung, eine verbesserte Sensoreinheit zur Verfügung zu stellen, insbesondere eine Sensoreinheit, die möglichst für verschiedene Wärmeübertrager, insbesondere Verdampfer verwendet werden kann.

Diese Aufgabe wird gelöst durch eine Sensoreinheit mit den Merkmalen des Anspruchs 1. Vorteilhafte Ausgestaltungen sind Gegenstand der Unteransprüche.

Erfingdungsgemäß ist eine Sensoreinheit vorgesehen, insbesondere für einen Verdampfer eines Kraftfahrzeugs, mit mindestens einem in einem Gehäuse angeordneten Sensor-Element, das über ein Kabel elektrisch kontaktiert ist, wobei das Gehäuse mehrere voneinander beabstandete Aufnahmen für das Sensor-Element aufweist. Die Aufnahmen dienen hierbei der exakten Positionierung und Halterung der Sensor-Elemente, wobei nicht notwendigerweise ein direkter Kontakt mit dem Sensor-Element vorgesehen sein muss, sondern dieser auch mit einem anderen, mit dem Sensor-Element verbundenen Teil, beispielsweise dem Kabel und/oder einem der exakten Positionierung dienenden Vorsprung etc., gebildet werden kann.

Durch das Vorsehen mehrerer Aufnahmen kann ein Standardgehäuse für verschiedene Sensoreinheiten verwendet werden, bei denen das jeweilige Sensor-Element an unterschiedlichen Stellen positionierbar ist, um eine gute Regelung zu ermöglichen. Die Sensoreinheiten unterscheiden sich lediglich durch die Anordnung des Sensor-Elements in einer der verschiedenen Aufnahmen. Diese Ausgestaltung verringert die Anzahl unterschiedlicher Sensoreinheiten für unterschiedliche Verdampfer, bei denen die Messstellen an unterschiedlichen Stellen vorzusehen sind. Ferner kann die Haltevorrichtung für die Sensoreinheiten in Folge der Standardisierung der Gehäuse ebenfalls standardisiert werden, so dass sich die Anzahl unterschiedlicher Bauteile und somit die Herstellungskosten verringern lassen und sich dadurch die Lagerhaltung erheblich vereinfacht.

Die Aufnahmen können durch Öffnungen, beispielsweise gebildet durch Aussparungen während eines Spritzgießens, im Gehäuse gebildet sein, jedoch sind auch beliebige andere Ausgestaltungen der Aufnahmen möglich, beispielsweise kann das Sensor-Element seitlich über das Gehäuse überstehen, so dass das Sensor-Element nur teilweise oder gar nicht direkt durch das Gehäuse geschützt ist. In diesem Fall können zusätzliche Schutzmassnahmen vorgesehen sein, die vorzugsweise direkt an der Einheit Kabel-Sensor-Element vorgesehen sind.

Bei den Sensorelementen kann es sich insbesondere um Temperatur-Sensor-Elemente handeln, vorzugsweise um NTC-Elemente und/oder um PTC-Elemente.

Das Gehäuse ist bevorzugt langgestreckt ausgebildet, wobei die Aufnahmen über die Länge des Gehäuses verteilt angeordnet sind. Hierbei ist nur in genau einer der Aufnahmen ein Sensor-Element angeordnet, die anderen Aufnahmen sind leer oder das Kabel zum Sensor -Element verläuft durch diese Aufnahmen. Um die Anbringung der Sensoreinheit zu vereinfachen, kann das Gehäuse auch L-förmig ausgebildet sein, wobei im längeren Schenkel die Aufnahmen und im Bereich des kürzeren Schenkels, insbesondere an dessen Ende, die elektrische Kontaktierung des Kabels vorgesehen ist, vorzugsweise in Form eines Steckkontakts.

Bevorzugt sind zwei bis fünf, insbesondere drei oder vier, Aufnahmen für Sensor-Elemente vorgesehen. Entsprechend der Anzahl der Aufnahmen sind unterschiedliche Kabellängen vorgesehen, so dass je Aufnahme eine Kabellänge vorgegeben ist. Durch die Vorgabe der Kabellängen vereinfacht sich die Montage, da ein schnelles Einlegen des Sensor-Elements und des entsprechenden Teils des Steckers möglich ist, ohne dass ein zu langes Kabel speziell positioniert werden muss, bevor das Gehäuse geschlossen oder spritzgegossen wird.

Zur vereinfachten Montage kann das Gehäuse im Bereich der Befestigung der Sensoreinheit mindestens eine Schräge aufweisen. Beliebige Ausgestaltungen sind hierfür möglich, wobei die der Befestigung dienende bzw. dieselbe unterstützende Schräge mit einer entsprechenden Anlagefläche zusammenwirkt, so dass eine möglichst großflächige Kraftübertragung erfolgt.

Das Gehäuse bildet vorzugsweise einen Teil eines Steckkontakts, wobei es entsprechende am Kabelende vorgesehene Anschlüsse umgibt, so dass die elektrischen Anschlüsse geschützt werden, insbesondere vor Korrosion.

Bevorzugt ist das Gehäuse um das Kabel samt Sensor-Element spritzgegossen. Hierbei wird die Einheit Kabel-Sensor-Element bevorzugt in das Werkzeug eingefegt, wobei in Folge der definierten Kabellänge das Sensor Element automatisch im Bereich der gewünschten späteren Aufnahme positioniert wird.

Das Gehäuse ist vorzugsweise durch einen nicht brennbaren Kunststoff gebildet. Je nach zu erwartender Belastungen kann der Kunststoff verstärkt ausgebildet sein, bspw. durch Glas- oder Kohlefasern, oder andere Füllmaterialien enthalten. Auch erweist sich die Verwendung von schlagfesten und/oder thermoplastischen Kunststoffen als vorteilhaft.

Eine derartige Sensoreinheit wird bevorzugt als Teil einer Überwachungs- und Regelungseinrichtung eines Verdampfers und/oder eines Heizkörpers einer Kraftfahrzeug-Klimaanlage verwendet, wobei sie, vorzugsweise über einen Stecickontakt, mit einer Steuereinheit verbunden ist.

Im Folgenden wird die Erfindung anhand eines Ausführungsbeispiels unter Bezugnahme auf die Zeichnung im Einzelnen erläutert. In der Zeichnung zeigen:
- Fig. 1a-c: Prinzipskizzen einer erfindungsgemäßen Sensoreinheit in drei Bestückungsvarianten gemäß dem Ausführungsbeispiel,
- Fig. 2: die Sensoreinheit von Fig. 1 in eingebautem Zustand hinter einem Verdampfer, und
- Fig. 3a-c: Prinzipskizzen einer erfindungsgemäßen Sensoreinheit in drei Bestückungsvarianten gemäß einer Variante des Ausführungsbeispiels.

Zur Regelung eines Verdampfers 1 einer Kraftfahrzeug-Klimaanlage ist in Luftströmungsrichtung gesehen hinter dem Verdampfer 1 eine Sensoreinheit 2 für die Messung der Temperatur der den Verdampfer 1 durchströmenden Luft angeordnet, wobei die Messstelle 3 in dem den Verdampfer 1 durchströmenden Luftstrom an dem bei Betrieb der Klimaanlage kältesten Punkt angeordnet ist. Diese Anordnung hat den Vorteil, dass damit einer Vereisung des Verdampfers besonders effektiv vorgebeugt werden kann. Im Falle einer Verwendung der Sensoreinheit 2 bei einem Heizkörper kann neben der Anordnung am kältesten Punkt auch eine Anordnung am heißesten Punkt bzw. an einem Punkt mit einer Durchschnittstemperatur von Vorteil sein.

Wesentlicher Bestandteil der Sensoreinheit 2 ist ein als Sensor dienendes NTC-Element 4 (NTC = negative temperature coefficient), welches eine Kennlinie mit negativem Temperaturkoeffizienten aufweist. Das NTC-Element 4 ist auf an sich bekannte Weise mit einem Kabel 5 verlötet und in ein Gehäuse 6 aus einem nicht brennbaren Kunststoff eingespritzt. Das Gehäuse 6 bildet hierbei sowohl einen Schutz für das NTC-Element 4 samt Kabel 5 als auch einen Schutz für die elektrische Kontaktierung des Kabels 5 vor Korrosion etc., wobei das Gehäuse 6 im entsprechenden Bereich als Teil eines Steckers ausgebildet ist. Femer dient das Gehäuse 6 als eine Halterung für das NTC-Element 4 samt Kabel 5.

Das Gehäuse 6 ist L-förmig ausgebildet, wobei der kurze Schenkel des L der elektrischen Kontaktierung und Befestigung und der lange Schenkel der Anordnung und Positionierung des NTC-Elements 4 im Luftstrom dient.

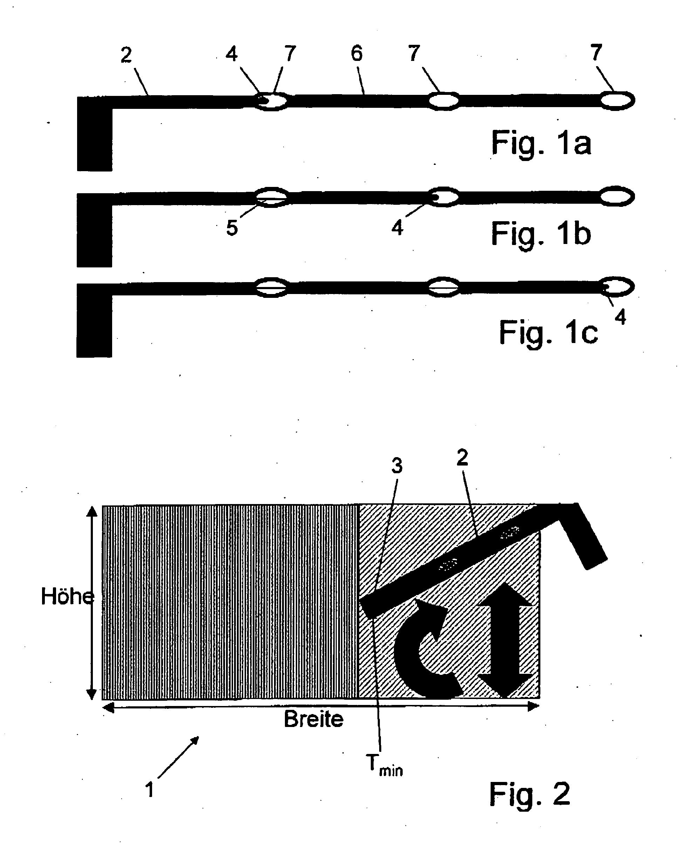

Um die Sensoreinheit 2 auf möglichst einfache Weise und kostengünstig möglichst universell einsetzbar zu machen, ist vorliegend das Gehäuse 6 mit drei im langen Schenkel des Gehäuses 6 ausgebildeten Aufnahmen 7 versehen, wobei alle drei Aufnahmen 7 das NTC-Element 4 aufnehmen können. Die Aufnahmen 7 sind jeweils durch Materialaussparungen gebildet, so dass das NTC-Element 4 in das Innere einer fensterartigen Öffnung ragt (vgl. Fig. 1a). Die Öffnung ist so groß, dass ausreichend Luft am NTC-Element 4 vorbeiströmen kann und die Messung nicht verfälscht wird.

Die abschließende Positionierung des NTC-Elements 4 in der jeweiligen Aufnahme 7 erfolgt in Abhängigkeit der Messstelle und der hiermit in Zusammenhang stehenden erforderlichen Länge der Sensoreinheit 2. Fig. 1a zeigt die Anordnung des NTC-Elements 4 in der Aufnahme 7, die am nächsten zum Stecker ist, Fig. 1b die Anordnung in der Aufnahme 7, die mittig im langen Schenkel ausgebildet ist, und Fig. 1c die Anordnung in der am Ende des langen Schenkels ausgebildeten Aufnahme.

Zur Vereinfachung der exakten Positionierung des NTC-Elements 4 in der gewünschten Aufnahme sind Kabel 5 mit drei unterschiedlichen Längen vorgesehen, die jeweils eine exakte Positionierung in der gewünschten Aufnahme 7 ermöglichen.

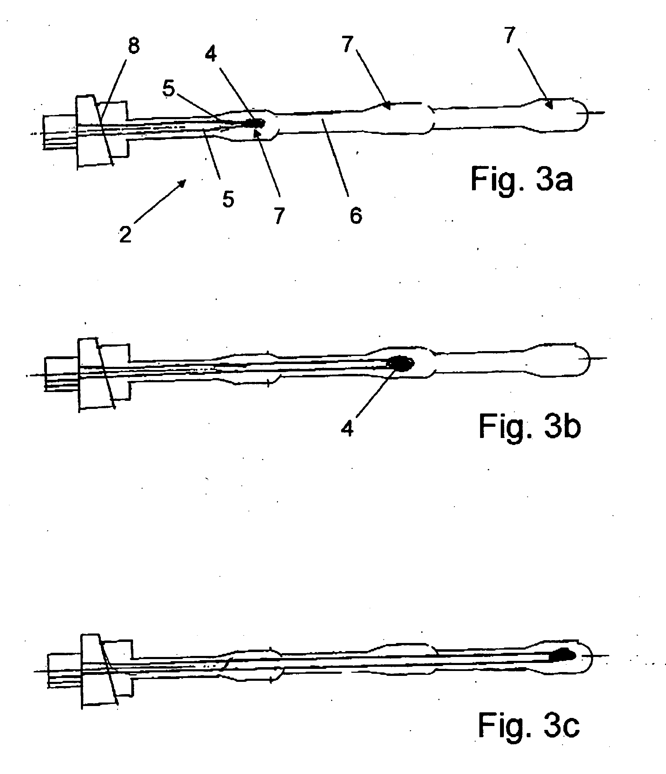

Gemäß der in den Figuren 3a bis 3c dargestellten Variante ist das Gehäuse 6 langgestreckt, d.h. nicht L-förmig, und in der Nähe des Steckers mit einer als Anlagefläche dienenden Schräge 8 versehen ausgebildet, welche der besseren Fixierbarkeit und flexibleren Positionierung des NTC-Elements 4 im Luftkanal dient. Vorliegend ist das Gehäuse 6 um das NTC-Element 4 und das Kabel 5 gespritzt. Ansonsten entspricht die Ausgestaltung der des ersten Ausführungsbeispiels, d.h. es sind wiederum drei mögliche Aufnahmen für das eine NTC-Element 4 vorgesehen, das an einem Kabel angelötet ist. Entsprechend sind wiederum drei unterschiedliche Kabellängen vorgesehen.

Gemäß einer alternativen Ausführungsform ist das Gehäuse getrennt vom NTC-Element und Kabel ausgebildet, wobei das Gehäuse zweiteilig ausgebildet ist und nach dem Einlegen des NTC-Elements samt Kabel geschlossen wird. Hierbei sind die beiden Gehäusehälften, wobei die Gehäusehätften nicht notwendigerweise mittig geteilt sein müssen, fluiddicht miteinander verbunden, so dass ein elektrischer Kurzschluss o.ä. sicher vermieden werden kann. Das Verschließen kann beispielsweise mittels mehrerer Clipsverbindungen, Schrauben oder Verkleben erfolgen.

## Patentansprüche

1. Sensoreinheit, insbesondere für einen Verdampfer (1) eines Kraftfahrzeugs, mit einem in einer Aufnahme (7) eines Gehäuses (6) angeordneten Sensor-Element (4), das über ein Kabel (5) elektrisch kontaktiert ist und der Temperaturmessung dient, wobei das Gehäuse (6) mehrere voneinander beabstandete Aufnahmen (7) für das Sensor-Element (4) aufweist, die in einer Reihe zueinander vorgesehen sind, **dadurch gekennzeichnet, dass** nur in genau einer der Aufnahmen (7) ein Sensor-Element (4) angeordnet ist.

2. Sensoreinheit nach Anspruch 1, **dadurch gekennzeichnet, dass** wenigstens ein Sensor-Element (4) ein Temperatur-Sensor-Element ist, insbesondere ein NTC-Element und/oder ein PTC-Element.

3. Sensoreinheit nach Anspruch 1 oder 2, **dadurch gekennzeichnet, dass** das Gehäuse (6) langgestreckt ausgebildet ist, wobei die Aufnahmen (7) über die Länge des Gehäuses (6) verteilt angeordnet sind.

4. Sensoreinheit nach einem der vorangehenden Ansprüche, **dadurch gekennzeichnet, dass** zwei bis fünf, insbesondere drei oder vier, Aufnahmen (7) vorgesehen sind.

5. Sensoreinheit nach einem der vorhergehenden Ansprüche, **dadurch gekennzeichnet, dass** die Kabellänge an die Länge des Gehäuses (6) bis zur Aufnahme (7) angepasst ist.

6. Sensöreinheit nach einem der vorhergehenden Ansprüche, **dadurch gekennzeichnet, dass** das Gehäuse (6) im Bereich der Befestigung der Sensoreinheit (2) eine Schräge (8) aufweist.

7. Sensoreinheit nach einem der vorhergehenden Ansprüche, **dadurch gekennzeichnet, dass** das Gehäuse (6) einen Teil eines Steckkontakts bildet und die elektrischen Anschlüsse schützt.

8. Sensoreinheit nach einem der vorhergehenden Ansprüche, **dadurch gekennzeichnet, dass** das Gehäuse (6) um das Kabel (5) samt Sensor-Element (4) spritzgegossen ist.

9. Sensoreinheit nach einem der vorhergehenden Ansprüche, **dadurch gekennzeichnet, dass** das Gehäuse (6) durch einen nicht brennbaren Kunststoff gebildet ist.

10. Sensoreinheit nach einem der vorhergehenden Ansprüche, **dadurch gekennzeichnet, dass** das Gehäuse (6) L-förmig ausgebildet ist.

11. Verwendung einer Sensoreinheit (2) nach einem der vorhergehenden Ansprüche als Teil einer Überwachungs- und Regelungseinrichtung eines Verdampfers (1) und/oder eines Heizkörpers einer Kraftfahrzeug-Klimaanlage.

## Claims

1. Sensor unit, in particular for an evaporator (1) of a motor vehicle, with a sensor element (4) accommodated in a location (7) of a housing (6), which is electrically connected via a cable (5) and is used for measuring temperature, wherein the housing (6) is provided with a plurality of spaced locations (7) for the sensor element (4), which are arranged in a row relative to one another, **characterised in that** a sensor element (4) is provided in only one of the locations (7).

2. Sensor unit according to claim 1, **characterised in that** at least one sensor element (4) is a temperature sensor element, in particular an NTC element and/or a PTC element.

3. Sensor unit according to claim 1 or 2, **characterised in that** the housing (6) is elongated, the locations (7) being distributed along the length of the housing (6).

4. Sensor unit according to any of the preceding claims, **characterised in that** two to five, in particular three or four, locations (7) are provided.

5. Sensor unit according to any of the preceding claims, **characterised in that** the length of the cable matches the length of the housing (6) up to the location (7).

6. Sensor unit according to any of the preceding claims, **characterised in that** the housing (6) has a bevel (8) in the region of the mounting of the sensor unit (2).

7. Sensor unit according to any of the preceding claims, **characterised in that** the housing (6) forms a part of a plug contact and protects the electrical connections.

8. Sensor unit according to any of the preceding claims, **characterised in that** the housing (6) is injection-moulded around the cable (5) together with the sensor element (4).

9. Sensor unit according to any of the preceding claims, **characterised in that** the housing (6) is made of a non-inflammable plastic material.

10. Sensor unit according to any of the preceding claims, **characterised in that** the housing (6) is L-shaped.

11. Use of a sensor unit (2) according to any of the preceding claims as part of a monitoring and control device of an evaporator (1) and/or a heater of a motor vehicle air conditioning system.

## Revendications

1. Ensemble détecteur, en particulier pour un évaporateur (1) d'un véhicule automobile, comprenant un élément de capteur (4) disposé dans un logement (7) d'un boîtier (6), élément de capteur qui est mis en contact électriquement par un câble (5) et sert à la mesure de la température, où le boîtier (6) présente plusieurs logements (7) prévus pour l'élément de capteur (4) et espacés les uns des autres, logements qui sont prévus dans une rangée les uns par rapport aux autres,
**caractérisé en ce qu'**un élément de capteur (4) est disposé, de façon précise, seulement dans l'un des logements (7).

2. Ensemble détecteur selon la revendication 1, **caractérisé en ce qu'**au moins un élément de capteur (4) est un élément de capteur de température, en particulier un élément à coefficient de température négatif (CTN) et / ou un élément à coefficient de température positif (CTP).

3. Ensemble détecteur selon la revendication 1 ou 2, **caractérisé en ce que** le boîtier (6) est configuré en long, où les logements (7) sont disposés en étant répartis sur la longueur du boîtier (6).

4. Ensemble détecteur selon l'une quelconque des revendications précédentes, **caractérisé en ce qu'**il est prévu de deux à cinq, en particulier trois ou quatre logements (7).

5. Ensemble détecteur selon l'une quelconque des revendications précédentes, **caractérisé en ce que** la longueur de câble est adaptée à la longueur du boîtier (6), jusqu'au logement (7).

6. Ensemble détecteur selon l'une quelconque des revendications précédentes, **caractérisé en ce que** le boîtier (6) présente une partie inclinée (8) dans la zone de la fixation de l'ensemble détecteur (2).

7. Ensemble détecteur selon l'une quelconque des revendications précédentes, **caractérisé en ce que** le boîtier (6) forme une partie d'un contact mâle et protège les connexions électriques.

8. Ensemble détecteur selon l'une quelconque des revendications précédentes, **caractérisé en ce que** le boîtier (6) est moulé par injection autour du câble (5) ainsi que de l'élément de capteur (4).

9. Ensemble détecteur selon l'une quelconque des revendications précédentes, **caractérisé en ce que** le boîtier (6) est formé par une matière plastique non inflammable.

10. Ensemble détecteur selon l'une quelconque des revendications précédentes, **caractérisé en ce que** le boîtier (6) est configuré en forme de L.

11. Utilisation d'un ensemble détecteur (2) selon l'une quelconque des revendications précédentes, comme partie d'un dispositif de surveillance et de régulation d'un évaporateur (1) et / ou d'un radiateur d'un système de climatisation d'un véhicule automobile.
